# EUROPÄISCHE PATENTSCHRIFT

(11) **EP 2 345 534 B1**
(45) Veröffentlichungstag und Bekanntmachung des Hinweises auf die Patenterteilung: **25.07.2012**
(21) Anmeldenummer: 10187832.0
(22) Anmeldetag: 18.10.2010
(51) Int. Cl.: B32B 1/08, F16L 11/08

(54) **Schlauchförmiger Artikel, insbesondere Förderschlauch, mit progressiver Volumenzunahme und Verfahren zu dessen Herstellung**
Tubular item, in particular conveyor hose, with progressive volume increase and method for producing same
Article tubulaire, notamment tuyau d'acheminement, doté d'une augmentation progressive du volume et son procédé de fabrication

(30) Priorität: 13.01.2010 DE 102010000061
(43) Veröffentlichungstag der Anmeldung: 20.07.2011
(73) Patentinhaber: ContiTech Schlauch GmbH, 30165 Hannover (DE)
(72) Erfinder: Brühne, Klaus, 34497, Korbach (DE); Lange, Rainer, 35110, Frankenau (DE); Tasseki, Metin, 34497, Korbach (DE)
(74) Vertreter: Finger, Karsten

(56) Entgegenhaltungen:
- WO-A2-2009/108289
- DE-A1- 19 757 459
- JP-A- 11 222 775
- JP-A- 2007 321 256

## Beschreibung

Die Erfindung betrifft einen schlauchförmigen Artikel, bestehend wenigstens aus:
- einer Innenschicht und Außenschicht aus einem polymeren Werkstoff mit elastischen Eigenschaften und
- einem zwischen der Innenschicht und Außenschicht eingebetteten ein- oder mehrlagigen Festigkeitsträger, der eine aus Textilfasern gebildete Fadenkonstruktion ist und dabei als Spirale oder Geflecht ausgebildet ist.

Als schlauchförmige Artikel der oben genannten Art sind insbesondere Förderschläuche zu nennen, die aus einer Innenschicht und Außenschicht und einem eingebetteten ein- oder mehrlagigen Festigkeitsträger sowie gegebenenfalls weiteren Schichten bestehen, beispielsweise aus einer Diffusionssperrschicht. Diesbezüglich wird beispielsweise auf folgende Patentliteratur verwiesen: DE 42 32 946 C2, DE 10 2004 051 073 A1, DE 10 2008 037 417 A1, EP 0 567 115 B1, EP 0 848 794 B1, EP 0 895 015 B1, EP 1 396 670 B1 und WO 2008/039373 A1.

Das Dokument WO 2009/108289 A2 offenbart einen schlauchförmigen Artikel mit dem folgenden Schichtenaufbau:
- einer Innenschicht und einer Außenschicht, die aus einem Elastomer bestehen sowie
- einem zwischen der Innenschicht und der Außenschicht eingebetteten Textilfestigkeitsträger, der als Spirale oder Geflecht ausgebildet ist, wobei der Textilfestigkeitsträger aus zwei verschiedenen Fäden besteht, die zwei verschiedene Ausdehnungen aufweisen.

Das Dokument JP 2007 321256 A beschreibt eine mit einem Harz präparierte Polyesterfaser zur Verstärkung von Artikeln, beispielsweise eines Schlauches.

Das Dokument JP 11 222775 A offenbart einen Artikel, beispielsweise einen Schlauch, aus EPDM, der mit einem Cord verstärkt ist.

Das Dokument DE 197 57 459 A1 beschreibt eine Isolationsröhre, wobei der Isolationskörper aus einem textilen Fasermaterial aus Matrixfasern und Bindefasern besteht.

Um bei einem Schlauch mit einem eingebetteten Festigkeitsträger eine hohe Anfangsvolumenzunahme zu erzielen, gibt es bislang im Wesentlichen nur zwei Möglichkeiten:
- Der Schlauch wird als Flachschlauch ausgebildet. Diese geometrische Lösung hat jedoch den Nachteil, dass der schlauchtechnische Anwendungsbereich sehr begrenzt ist, insbesondere unter dem Aspekt aller Arten von schlauchförmigen Artikeln, nämlich Förderschläuche, Luftfederbälge und Kompensatoren.
- Der Festigkeitsträger ist ein Fadenverbund mit zwei oder mehreren unterschiedlichen Fadenwerkstoffe (Hybrid-System), wobei die Mischzwirne am häufigsten zur Anwendung kommen. Ein beispielhaftes Hybrid-System ist aus der Offenlegungsschrift WO 2008/0393373 A1 bekannt, wonach ein p-Aramid mit einem m-Aramid, insbesondere als Mischzwirn, kombiniert wird. Allerdings kommt dieses Mischkonzept bislang im Wesentlichen für einen Festigkeitsträger in Form eines Gestrickes zum Einsatz (WO 2008/0393373 A1 - Fig. 1). Bei einem Festigkeitsträger, dessen Fadenkonstruktion als Spirale oder Geflecht ausgebildet ist, liefern derartige Mischkonzepte hinsichtlich der Zielsetzung nach einer hohen Anfangsvolumenzunahme häufig nicht den gewünschten Effekt. Dabei ist die Geflechtsausbildung der Fadenkonstruktion eine besonders häufige Festigkeitsträgerform bei schlauchförmigen Artikeln. Hinzu kommt, dass derartige Festigkeitsträgerhybride in der Vergangenheit auf der Basis einer anderen Aufgabenstellung entwickelt wurden. So wird beispielsweise in der Offenlegungsschrift DE 10 2008 037 417 A1 ein Polyphenylensulfid (PPS) mit einem haftaktivierbaren textilen Werkstoff (z.B. Polyamid) verzwirnt, um einen Haftverbund mit dem umgebenden polymeren Werkstoff zu erzielen.

Im Hintergrund der oben genannten Problematik besteht die Aufgabe der Erfindung darin, einen gattungsgemäßen schlauchförmigen Artikel bereitzustellen, der sich auch bei einer Fadenkonstruktion, die als Spirale oder als Geflecht ausgebildet ist, durch ein hohe Anfangsvolumenzunahme auszeichnet und zudem ein gutes Dämpfungsvermögen bei kleinsten Drücken aufweist.

Gelöst wird diese Aufgabe dadurch, dass die Fadenkonstruktion ein Fadenpaket ist, bestehend wenigstens aus:
- einem Fixierfaden mit niedriger Reißkraft und
- einem Mantelfaden, der den Fixierfaden umschließt und eine höhere Reißkraft aufweist als der Fixierfaden.

Hinsichtlich des Fixierfadens, der auch als Hilfsfaden bezeichnet wird, und des Mantelfadens werden im Folgenden die bevorzugten Werkstoffkriterien angegeben, und zwar unter qualitativen wie auch quantitativen Gesichtspunkten.

### Fixierfaden

- Der Fixierfaden ist ein Garn oder ein Zwirn. Der Fixierfaden liegt dabei insbesondere als Garn vor.
- Der Fixierfaden besteht aus Polyamid (PA), Polyester (PES), Polyvinylacetal (PVA), Baumwolle (CO), Modal (CMD) oder aus einem Polyolefin. Hinsichtlich der Gruppe der Polyolefine sind insbesondere Polyethylen (PE) oder Polypropylen (PP) zu nennen.
- Der Fixierfaden weist eine Festigkeit geringer als 20N auf.
- In Bezug auf das Gesamtfadenpaket aus Fixierfaden und Mantelfaden beträgt der Mengenanteil des Fixierfadens 5 bis 30 Gew.-%.

### Mantelfaden

- Der Mantelfaden ist ein Garn oder ein Zwirn.
- Der Mantelfaden umläuft helixförmig oder schraubenförmig den Fixierfaden.
- Der Mantelfaden umfasst wenigstens einen ersten Faden und zweiten Faden, die gekreuzt zueinander angeordnet sind. Die diesbezügliche Werkstoffe können gleich oder verschieden sein, wobei für jeden Mantelfaden die gleiche Werkstoffkonzeption bevorzugt ist.
- Der Mantelfaden besteht aus Aramid, insbesondere aus p-Aramid oder m-Aramid. Besonders bevorzugt ist dabei das p-Aramid. Die weiteren Werkstoffmöglichkeiten sind: Polyamid (PA), Polyester (PES), Polyvinylalkohol (PVAL), Rayon (CV), Polyoxadiazol (POD) oder p-Phenylen-2,6-benzobisoxazol (PBO).

Die hier genannten Werkstoffe zeichnen sich zudem durch eine gute Haftfähigkeit zum umgebenden polymeren Werkstoff aus bzw. sind haftaktivierbar.
- Der Mantelfaden weist einen E-Modul von 6 bis 270 [GPa] auf.
- In Bezug auf das Gesamtfadenpaket aus Fixierfaden und Mantelfaden beträgt der Mengenanteil des Mantelfadens 70 bis 95 Gew.-%.

Der schlauchförmige Artikel mit dem neuen Festigkeitsträgerkonzept kann für Förderschläuche, Luftfederbälge und Kompensatoren zur Anwendung gelangen. Von besonderer Bedeutung ist der Einsatz auf dem Schlauchsektor, wobei wiederum insbesondere folgende Anwendungen zu nennen sind:
- hochvolumige Schläuche für Fahrzeuganwendungen;
- Schläuche für Motorölkühlung und Getriebeölkühlung;
- Kraftstoffschläuche.

Hinsichtlich des polymeren Werkstoffes mit elastischen Eigenschaften für die Innenschicht und Außenschicht des schlauchförmigen Artikels kommen insbesondere folgende beiden Varianten zum Einsatz:

### Variante A

Der polymere Werkstoff ist ein elastomerer Werkstoff auf der Basis einer vulkanisierten Kautschukmischung, die eine unverschnittene Kautschukkomponente oder einen Kautschukkomponentenverschnitt und übliche Mischungsingredienzien enthält. Als Kautschukkomponenten sind insbesondere zu nennen:
Ethylen-Propylen-Mischpolymerisat (EPM)
Ethylen-Propylen-Dien-Mischpolymerisat (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Ethylen-Acrylat-Kautschuk (AEM)
Silikonkautschuk (MQ, VMQ, PVMQ, FVMQ; DE 10 2006 058 470 A1)
Fluorierter Methylsilikonkautschuk (MFQ)
Perfluorinierter Propylen-Kautschuk (FFPM)
Perfluorcarbon-Kautschuk (FFKM)
Polyurethan (PU)

Auch der Einsatz eines Verschnittes, insbesondere in Verbindung mit einem der vorgenannten Kautschuktypen, beispielsweise ein NR/BR-Verschnitt, ist möglich.

Von besonderer Bedeutung sind: EPM, EPDM, CR, NR, NBR, CM, CSM, HNBR, FKM, ACM oder AEM.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Fasern). Diesbezüglich wird auf den allgemeinen Stand der Kautschukmischungstechnologie verwiesen.

### Variante B

Der polymere Werkstoff ist ein thermoplastisches Vulkanisat (thermoplastisches Elastomer, Kurzbezeichnung TPE), enthaltend wenigstens eine Thermoplastkomponente, wenigstens eine Kautschukkomponente, die zumindest teilvernetzt ist, sowie übliche Mischungsingredienzien.

Die bevorzugten Thermoplastkomponenten sind ein:
Polyolefin, insbesondere Polyethylen (PE) oder Polypropylen (PP)
Polystyrol;
Polyamid (PA), beispieslweise PA6 oder PA6.6;
Polyester (PES).

Als Kautschukkomponenten sind insbesondere EPM, EPDM, SBR, CR, NR, NBR, FKM, ACM oder AEM zu nennen, die insbesondere mit keiner weiteren Kautschukkomponente verschnitten sind.

Hinsichtlich der üblichen Mischungsingredienzien wird auf die Mischungstechnologie zu der Variante A, insbesondere auf die Lehre gemäß der Offenlegungsschrift DE 100 04 632 A1 verwiesen.

Die beiden polymeren Werkstoffvarianten (A, B) sind insbesondere bei Förderschläuchen von Bedeutung.

Das Werkstoffkonzept (A, B) ist auch anwendbar, wenn der schlauchförmige Artikel, insbesondere wiederum der Förderschlauch, eine oder mehrere Zwischenschicht/en mit elastischen Eigenschaften besitzt.

Eine weitere Aufgabe der Erfindung besteht darin, ein Verfahren zur Herstellung eines gattungsgemäßen schlauchförmigen Artikels bereitzustellen, der sich auch bei einer Fadenkonstruktion, die als Spirale oder als Geflecht ausgebildet ist, durch eine hohe Anfangsvolumenzunahme auszeichnet und zudem ein gutes Dämpfungsvermögen bei kleinsten Drücken aufweist. Darüber hinaus soll eine Kostenoptimierung und Vereinfachung des Fertigungsprozesses erzielt werden.

Gelöst wird diese Aufgabe dadurch, dass bei der Festigkeitsträgerkonfektionierung des Artikelrohlings eine Fadenkonstruktion eingesetzt wird, die ein Fadenpaket ist, bestehend wenigstens aus:
- einem Fixierfaden mit niedriger Reißkraft;
- einem Mantelfaden, der den Fixierfaden umschließt und eine höhere Reißkraft aufweist als der Fixierfaden, wobei der Fixierfaden unter Druck und/oder Wärme zerstört und/oder aufgelöst wird.

Hinsichtlich der bevorzugten Ausführungen des Fixierfadens und Mantelfadens wird auf das bereits Erwähnte verwiesen. Hinsichtlich des Fixierfadens werden jedoch ergänzend noch folgende bevorzugten Ausführungen genannt:
- Es wird ein Fixierfaden eingesetzt, der aus Stapelfasern oder Endlosfasern gebildet ist.
- Es wird ein Fixierfaden eingesetzt, der ein Garn ist.
- Der Fixierfaden wird derart im Fadenpaket angeordnet, dass dieser die Seele des Fadenpakets bildet.

Während des Fertigungsprozesses sorgt der Fixierfaden dafür, dass der Festigkeitsträger ohne Vordehnung gefertigt werden kann. Dieser Fixierfaden wird dann im Vulkanisationsprozess bei Temperaturen zwischen 130 und 200 °C thermisch zerstört bzw. bei schmelzbaren Werkstoffen (z.B. bei Polyethylen) aufgelöst oder durch einen einmaligen Prüfdruck durchtrennt.

Der schlauchförmige Artikel besitzt somit im Rahmen seiner späteren Verwendung keinen Fixierfaden mehr.

Die Erfindung wird nun anhand von Ausführungsbeispielen unter Bezugnahme auf schematische Zeichnungen erläutert. Es zeigen:
- Fig. 1: einen schlauchförmigen Artikel mit einem eingebetteten Festigkeitsträger in Form eines Geflechts;
- Fig. 2: einen schlauchförmigen Artikel mit einem eingebetteten Festigkeitsträger mit zwei Lagen in gekreuzter Anordnung;
- Fig. 3: eine Fadenkonstruktion in Form eines Fadenpakets, gebildet aus Mantelfaden und Fixierfaden;
- Fig. 4: ein Vergleichsdiagramm mit den Kurven a und b.

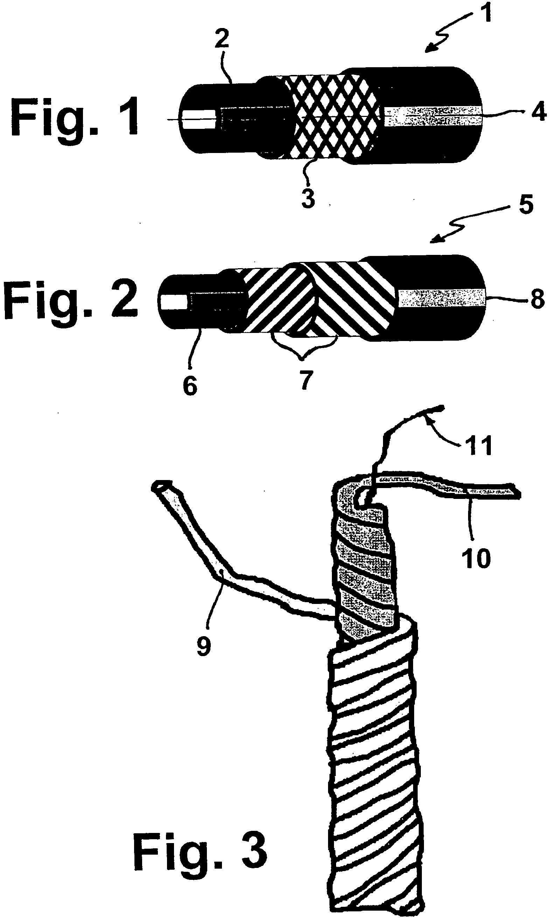

Nach Fig. 1 besteht der schlauchförmige Artikel 1 in Form eines Förderschlauches aus einer Innenschicht 2 und Außenschicht 4 aus einem elastomeren Werkstoff, beispielsweise auf der Basis von ACM für die Innenschicht 2 und auf der Basis von EPDM für die Außenschicht 4. Zwischen der Innenschicht 2 und der Außenschicht 4 ist ein Festigkeitsträger 3 eingebettet, der eine aus Textilfasern gebildete Fadenkonstruktion ist und dabei als Geflecht ausgebildet ist.

Fig. 2 zeigt einen schlauchförmigen Artikel 5, wiederum in Form eines Förderschlauches, mit einer Innenschicht 6 und Außenschicht 8. Zwischen der Innenschicht 6 und der Außenschicht 8 ist ebenfalls ein Festigkeitsträger 7 eingebettet, der eine aus Textilfasern gebildete Fadenkonstruktion ist. Der Festigkeitsträger besteht hier aus zwei Lagen, wobei innerhalb einer Lage ein Cordfaden in Schlauchlängsrichtung spiralförmig verläuft. Von Lage zu Lage ist dabei der Cordfaden gekreuzt zueinander angeordnet. Ein derartiger Schlauch wird auch als Cordschlauch bezeichnet.

Nach Fig. 3 ist die Fadenkonstruktion ein Fadenpaket, gebildet aus:
- einem Fixierfaden 11 mit niedriger Reißkraft, beispielsweise aus Polyvinylacetal (PVA);
- einem ersten Mantelfaden 9 und einem zweiten Mantelfaden 10, beispielsweise jeweils aus p-Aramid, wobei die beiden Mantelfäden gekreuzt zueinander angeordnet sind und dabei den Fixierfaden 11 umschließen und dabei eine höhere Reißkraft aufweisen als der Fixierfaden.

Der schlauchförmige Artikel im Rahmen seiner späteren Verwendung besitzt keinen Fixierfaden 11 mehr, da dieser unter dem Einfluss von Druck und/oder Wärme zerstört und/oder aufgelöst wird.

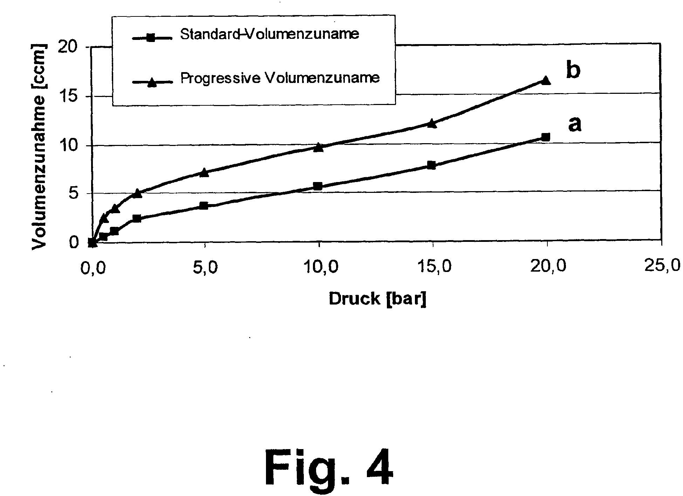

Fig. 4 zeigt nun ein Vergleichsdiagramm mit folgenden Daten bzw. Kriterien:
- Ordinate:: Volumenzunahme [ccm]
- Abszisse:: Druck [bar]
- Kurve a:: Standard-Volumenzunahme eines schlauchförmigen Artikels nach dem Stand der Technik
- Kurve b:: Progressive Volumenzunahme gemäß eines erfindungsgemäßen schlauchförmigen Artikels

### Bezugszeichenliste

### (Teil der Beschreibung)

- 1: Schlauchförmiger Artikel
- 2: Innenschicht
- 3: Festigkeitsträger in Form eines Geflechts
- 4: Außenschicht
- 5: Schlauchförmiger Artikel
- 6: Innenschicht
- 7: Festigkeitsträger mit zwei Lagen in gekreuzter Anordnung
- 8: Außenschicht
- 9: erster Mantelfaden
- 10: zweiter Mantelfaden
- 11: Fixierfaden (Hilfsfaden)

## Patentansprüche

1. Schlauchförmiger Artikel (1, 5), bestehend wenigstens aus:
- einer Innenschicht (2, 6) und Außenschicht (4, 8) aus einem polymeren Werkstoff mit elastischen Eigenschaften und
- einem zwischen der Innenschicht (2, 6) und Außenschicht (4, 8) eingebetteten ein-oder mehrlagigen Festigkeitsträger (3, 7), der eine aus Textilfasern gebildete Fadenkonstruktion ist und dabei als Spirale oder Geflecht ausgebildet ist;
**dadurch gekennzeichnet, dass** die Fadenkonstruktion ein Fadenpaket ist, bestehend wenigstens aus:
- einem Fixierfaden (11) mit niedriger Reißkraft und
- einem Mantelfaden (9, 10), der den Fixierfaden 11) umschließt und eine höhere Reißkraft aufweist als der Fixierfaden (11).

2. Schlauchförmiger Artikel nach Anspruch 1, **dadurch gekennzeichnet, dass** der Fixierfaden (11) und/oder der Mantelfaden (9, 10) ein Garn oder Zwirn ist/sind.

3. Schlauchförmiger Artikel nach Anspruch 1 oder 2, **dadurch gekennzeichnet, dass** der Mantelfaden (9, 10) helixförmig oder schraubenförmig den Fixierfaden (11) umläuft.

4. Schlauchförmiger Artikel nach einem der Ansprüche 1 bis 3, **dadurch gekennzeichnet, dass** der Mantelfaden (9, 10) einen ersten Faden (9) und zweiten Faden (10) umfasst, die gekreuzt zueinander angeordnet sind.

5. Schlauchförmiger Artikel nach einem der Ansprüche 1 bis 4, **dadurch gekennzeichnet, dass** der Fixierfaden (11) aus Polyamid (PA), Polyester (PES), Polyvinylacetal (PVA), Baumwolle (CO), Modal (CMD) oder einem Polyolefin besteht.

6. Schlauchförmiger Artikel nach einem der Ansprüche 1 bis 5, **dadurch gekennzeichnet, dass** der Mantelfaden (9, 10) aus Aramid, insbesondere p-Aramid oder m-Aramid, Polyamid (PA), Polyester (PES), Polyvinylalkohol (PVAL), Rayon (CV), Polyoxadiazol (POD) oder p-Phenylen-2,6-benzobisoxazol (PBO) besteht.

7. Schlauchförmiger Artikel nach einem der Ansprüche 1 bis 6, **dadurch gekennzeichnet, dass** der Fixierfaden (11) eine Festigkeit geringer als 20N aufweist.

8. Schlauchförmiger Artikel nach einem der Ansprüche 1 bis 7, **dadurch gekennzeichnet, dass** der Mantelfaden (9, 10) einen E-Modul von 6 bis 270 [GPa] aufweist.

9. Schlauchförmiger Artikel nach einem der Ansprüche 1 bis 8, **dadurch gekennzeichnet, dass** hinsichtlich des Fixierfadens (11) und des Mantelfadens (9, 10) folgende Mengenanteile gelten:
| | |
|---|---|
| Fixierfaden (11) | 5 bis 30 Gew.-% |
| Mantelfaden (9, 10) | 95 bis 70 Gew.-% |

10. Schlauchförmiger Artikel nach einem der Ansprüche 1 bis 9, **dadurch gekennzeichnet, dass** dieser ein Förderschlauch, Luftfederbalg oder Kompensator ist.

11. Verfahren zur Herstellung eines schlauchförmigen Artikels (1, 5), bestehend wenigstens aus:
- einer Innenschicht (2, 6) und Außenschicht. (4, 8) aus einem polymeren Werkstoff mit elastischen Eigenschaften und
- einem zwischen der Innenschicht (2, 6) und Außenschicht (4, 8) eingebetteten ein-oder mehrlagigen Festigkeitsträger (3, 7), der eine aus Textilfasern gebildete Fadenkonstruktion ist und dabei als Spirale oder Geflecht ausgebildet ist;
**dadurch gekennzeichnet, dass** bei der Festigkeitsträgerkonfektionierung des Artikelrohlings eine Fadenkonstruktion eingesetzt wird, die ein Fadenpaket ist, bestehend wenigstens aus:
- einem Fixierfaden (11) mit niedriger Reißkraft;
- einem Mantelfaden (9, 10), der den Fixierfaden (11) umschließt und eine höhere Reißkraft aufweist als der Fixierfaden (11), wobei der Fixierfaden (11) unter Druck und/oder Wärme zerstört und/oder aufgelöst wird.

12. Verfahren nach Anspruch 11, **dadurch gekennzeichnet, dass** ein Fixierfaden (11) eingesetzt wird, der aus Stapelfasern oder Endlosfasern gebildet ist.

13. Verfahren nach Anspruch 11 oder 12, **dadurch gekennzeichnet, dass** ein Fixierfaden (11) eingesetzt wird, der ein Garn ist.

14. Verfahren nach einem der Ansprüche 11 bis 13, **dadurch gekennzeichnet, dass** der Fixierfaden (11) derart im Fadenpaket angeordnet wird, dass dieser die Seele des Fadenpaketes bildet.

## Claims

1. Tubular article (1, 5) consisting at least of:
- an inner layer (2, 6) and an outer layer (4, 8) made of a polymeric material with elastic properties, and
- a single-ply or multi-ply reinforcing element (3, 7) which is embedded between the inner layer (2, 6) and the outer layer (4, 8) and is a thread construction formed from textile fibres, and in this case is in the form of a spiral or braid;
**characterized in that** the thread construction is a thread bundle consisting at least of:
- a fixing thread (11) with a low tearing strength, and
- a sheath thread (9, 10), which encloses the fixing thread (11) and has a higher tearing strength than the fixing thread (11).

2. Tubular article according to Claim 1, **characterized in that** the fixing thread (11) and/or the sheath thread (9, 10) is/are a yarn or twine.

3. Tubular article according to Claim 1 or 2, **characterized in that** the sheath thread (9, 10) surrounds the fixing thread (11) in helical form or in spiral form.

4. Tubular article according to one of Claims 1 to 3, **characterized in that** the sheath thread (9, 10) comprises a first thread (9) and a second thread (10) which are arranged crossed with respect to each other.

5. Tubular article according to one of Claims 1 to 4, **characterized in that** the fixing thread (11) consists of polyamide (PA), polyester (PES), polyvinyl acetal (PVA), cotton (CO), modal (CMD) or a polyolefin.

6. Tubular article according to one of Claims 1 to 5, **characterized in that** the sheath thread (9, 10) consists of aramid, in particular p-aramid or m-aramid, polyamide (PA), polyester (PES), polyvinyl alcohol (PVAL), rayon (CV), polyoxadiazole (POD) or p-phenylene-2,6-benzobisoxazole (PBO).

7. Tubular article according to one of Claims 1 to 6, **characterized in that** the fixing thread (11) has a strength of less than 20 N.

8. Tubular article according to one of Claims 1 to 7, **characterized in that** the sheath thread (9, 10) has a modulus of elasticity of 6 to 270 [GPa].

9. Tubular article according to one of Claims 1 to 8, **characterized in that** the following quantitative proportions apply in terms of the fixing thread (11) and the sheath thread (9, 10):
| | |
|---|---|
| fixing thread (11) | 5 to 30% by weight, |
| sheath thread (9, 10) | 95 to 70% by weight. |

10. Tubular article according to one of Claims 1 to 9, **characterized in that** it is a delivery tube, an air spring lobe or a compensator.

11. Method for producing a tubular article (1, 5) consisting at least of:
- an inner layer (2, 6) and an outer layer (4, 8) made of a polymeric material with elastic properties, and
- a single-ply or multi-ply reinforcing element (3, 7) which is embedded between the inner layer (2, 6) and the outer layer (4, 8) and is a thread construction formed from textile fibres, and in this case is in the form of a spiral or braid;
**characterized in that**, for the fabrication of the reinforcing element for the article blank, use is made of a thread construction which is a thread bundle consisting at least of:
- a fixing thread (11) with a low tearing strength;
- a sheath thread (9, 10), which encloses the fixing thread (11) and has a higher tearing strength than the fixing thread (11), the fixing thread (11) being destroyed and/or disintegrated under pressure and/or heat.

12. Method according to Claim 11, **characterized in that** use is made of a fixing thread (11) which is formed from staple fibres or infinitely long fibres.

13. Method according to Claim 11 or 12, **characterized in that** use is made of a fixing thread (11) which is a yarn.

14. Method according to one of Claims 11 to 13, **characterized in that** the fixing thread (11) is arranged in the thread bundle in such a manner that it forms the core of the thread bundle.

## Revendications

1. Article (1, 5) en forme de tuyau flexible, constitué d'au moins :
- une couche intérieure (2, 6) et une couche extérieure (4, 8) en matériau polymère à propriétés élastiques et
- un renfort (3, 7) en une ou plusieurs couches incorporée entre la couche intérieure (2, 6) et la couche extérieure (4, 8), constitué d'une structure de fil formée de fibres textiles et configuré en spirale ou en treillis,
**caractérisé en ce que**
la structure de fil est un ensemble de fil constitué d'au moins :
- un fil de fixation (11) à basse résistance à la déchirure et
- un fil d'enveloppe (9, 10) qui englobe le fil de fixation (11) et dont la résistance à la déchirure est supérieure à celle du fil de fixation (11).

2. Article en forme de tuyau flexible selon la revendication 1, **caractérisé en ce que** le fil de fixation (11) et/ou le fil d'enveloppe (9, 10) sont des fils ou des torons.

3. Article en forme de tuyau flexible selon les revendications 1 ou 2, **caractérisé en ce que** le fil d'enveloppe (9, 10) entoure le fil de fixation (11) en hélice ou en vis.

4. Article en forme de tuyau flexible selon l'une des revendications 1 à 3, **caractérisé en ce que** le fil d'enveloppe (9, 10) comporte un premier fil (9) et un deuxième fil (10) croisés l'un par rapport à l'autre.

5. Article en forme de tuyau flexible selon l'une des revendications 1 à 4, **caractérisé en ce que** le fil de fixation (11) est constitué de polyamide (PA), de polyester (PES), de polyvinylacétal (PVA), de coton (CO), de Modal (CMD) ou de polyoléfine.

6. Article en forme de tuyau flexible selon l'une des revendications 1 à 5, **caractérisé en ce que** le fil d'enveloppe (9, 10) est constitué d'aramide, en particulier de p-aramide ou de m-aramide, de polyamide (PA), de polyester (PES), de poly(alcool vinylique) (PVAL), de rayonne (CV), de polyoxadiazole (POD) ou de p-phénylène-2,6-benzobisoxazole (PBO).

7. Article en forme de tuyau flexible selon l'une des revendications 1 à 6, **caractérisé en ce que** le fil de fixation (11) présente une résistance mécanique inférieure à 20 N.

8. Article en forme de tuyau flexible selon l'une des revendications 1 à 7, **caractérisé en ce que** le fil d'enveloppe (9, 10) présente un module d'élasticité de 6 à 270 [GPa].

9. Article en forme de tuyau flexible selon l'une des revendications 1 à 8, **caractérisé en ce que** les proportions suivantes s'appliquent au fil de fixation (11) et au fil d'enveloppe (9, 10) :
fil de fixation (11) : 5 à 30 % en poids
fil d'enveloppe (9, 10) : 95 à 70 % en poids.

10. Article en forme de tuyau flexible selon l'une des revendications 1 à 9, **caractérisé en ce qu'**il forme un tuyau flexible de transport, un soufflet d'amortisseur pneumatique ou un compensateur.

11. Procédé de fabrication d'un article (1, 5) en forme de tuyau flexible, constitué d'au moins :
- une couche intérieure (2, 6) et une couche extérieure (4, 8) en matériau polymère à propriétés élastiques et
- un renfort (3, 7) en une ou plusieurs couches incorporée entre la couche intérieure (2, 6) et la couche extérieure (4, 8), constitué d'une structure de fil formée de fibres textiles et configuré en spirale ou en treillis,
**caractérisé en ce que**
le confection du renfort de l'ébauche d'article utilise une structure de fils qui est un ensemble de fil constitué d'au moins :
la structure de fil est un ensemble de fil constitué d'au moins :
- un fil de fixation (11) à basse résistance à la déchirure et
- un fil d'enveloppe (9, 10) qui englobe le fil de fixation (11) et dont la résistance à la déchirure est supérieure à celle du fil de fixation (11),
le fil de fixation (11) étant détruit ou dissous sous l'action de la pression et/ou de la chaleur.

12. Procédé selon la revendication 11, **caractérisé en ce qu'**il utilise un fil de fixation (11) formé de fibres empilées ou de fibres sans fin.

13. Procédé selon les revendications 11 ou 12, **caractérisé en ce qu'**il utilise un fil de fixation (11) qui est un fil textile.

14. Procédé selon l'une des revendications 11 à 13, **caractérisé en ce que** le fil de fixation (11) est disposé dans l'ensemble de fil de manière à former l'âme de l'ensemble de fil.
